# EUROPEAN PATENT SPECIFICATION

(11) **EP 2 268 150 B1**
(45) Date of publication and mention of the grant of the patent: **03.10.2012**
(21) Application number: 09722291.3
(22) Date of filing: 18.03.2009
(51) Int. Cl.: H05B 6/80, A23L 3/01, A23L 1/025, A23B 9/04

(54) **DEVICE AND METHOD FOR MICROWAVE TREATMENT OF GRAIN**
GERÄT UND VERFAHREN FÜR DIE MIKROWELLENBEHANDLUNG VON GETREIDE
DISPOSITIF ET PROCÉDÉ DESTINÉS AU TRAITEMENT PAR MICRO-ONDES DE GRAINES

(30) Priority: 19.03.2008 SE 0800653
(43) Date of publication of application: 05.01.2011
(73) Proprietor: Skåne-Möllan Ab, 260 22 Tagarp (SE)
(72) Inventor: PERSSON, Sten, S-260 23 Kågeröd (SE)
(74) Representative: Larsson, Malin
(86) International application number: PCT/SE2009/000144
(87) International publication number: WO 2009/116923

(56) References cited:
- WO-A1-01/54519
- CA-A1- 975 434
- CA-A1- 1 061 867
- ES-A1- 2 164 014
- JP-A- 3 118 881
- JP-A- 6 165 660
- JP-A- 6 165 660
- US-A- 3 711 709
- US-A- 4 332 091
- US-A- 4 631 380
- US-A- 5 834 744
- US-A1- 3 590 202
- DATABASE WPI Week 200048, Derwent Publications Ltd., London, GB; AN 2000-530887, XP003025512 & RU 2 143 794 C1 (PLAZMA-T CO LTD) 10 January 2000

## Description

### Technical Field

The present invention relates to a device for microwave treatment of grain for reduction of microorganisms and enzymes in the grain. The invention also concerns a method for microwave treatment of grain.

### Background Art

The increased global trade which, among other things, has resulted in longer transports and in the introduction of safety systems (such as HACCP, Hazard Analysis Critical Control Point) in the food industry has augmented the pressure on food suppliers. Today, the consumers demand supplier specifications of the content of microorganisms and enzymes in the products and of the functionality of the products.

Grain products such as flour, groats and kernels have been considered as microbiologically safe products and their microorganism content has not been brought into question. However, new methods of cultivating grain with smaller amount of pesticides have resulted in a higher content than previously of microorganisms such as bacteria, yeast and mould and also enzymes, while at the same time new requirements from the food industry stipulate that the microorganism content must be reduced. Other causes too, such as a wet harvest period, can increase the content of microorganisms in grain.

New fields of application in the food industry, such as complete mixes with all the ingredients in dry form, require a considerably lower level of microorganisms than traditional fields of application and very low water content. The normal level of microorganisms in grain products excludes such use. Traditionally, no attempts have been made to reduce the number of microorganisms in grain products. The grains are only roughly screened when polished.

There is also considerable interest in new types of mixes and flour blends with a reduced content of enzymes occurring naturally in grain.

WO 01/54519 discloses a method for heat treatment of grain products by means of microwaves and describes the heat treatment of a flow of grain products by means of microwaves to reduce the content of microorganisms in the grain products. The grain products flow through a closed conduit or tube and are exposed to microwaves as they flow through the conduit or tube.

CA 1 061 867 A1 relates to a method of and apparatus for treating vegetable matter containing an anti-trypsin enzyme to destroy such enzyme. The vegetable matter is treated by being subjected to microwave energy and hot air.

US 4 332 091 discloses a microwave drying device comprising a microwave source for drying products in the form of grains.

JP 6 165 660 relates to a microwave heating sterilizer for highly viscous food.

ES 2 164 014 relates to killing of insects in cereal grains by treatment with microwaves.

It has been found difficult to achieve a uniform microwave treatment of the flow of grain products with prior-art methods and devices. The part of the grain products that passes closest to the microwave source will have a high temperature, whereas the part of the grain products that passes at a greater distance from the microwave source will have a lower temperature. There is a risk that part of ths grain products will not be heated to a temperature which is sufficiently high to reduce microorganisms and enzymes, If, however, the power of the generated microwaves is increased, there is a risk that the grain products that pass closest to the microwave source will have too high a temperature, which would change some of the properties of the grain products for the worse; for example taste, nutritional content or colour, or even burn the grain products if the power is exceedingly high. If the power is adjusted in view of the grain products closest to the microwave source, the temperature increase will not be sufficient in the grain products that pass furthest away from the microwave source and thus the microwave treatment will have little or no effect. As a result, the microorganisms and the enzymes will not be reduced to the desired degree.

To obtain a uniform temperature increase in the flow of grain, the diameter of the tube or conduit through which the flow is made to pass has been kept small. Consequently, it has not been possible to increase the mass flow to the desired degree in order to provide a rapid and efficient treatment process.

### Summary of the invention

One object of the present invention is to provide an improvement over prior art.

A further object is to provide a device and a method which enable a greater mass flow of treated grain in order to obtain a faster and more efficient process.

A still further object is to provide a device and a method which ensure a more uniform treatment of the flow of grain and a more uniform temperature distribution in the flow of grain.

Yet another object is to provide a reduction of microorganisms and enzymes in the whole flow of grain.

The present invention provides a device for microwave treatment of grain, which device comprises a tubular element, which extends along a longitudinal direction, a core element, which is arranged at least partly inside the tubular element such that a duct arranged to receive a flow of grain in said longitudinal direction is formed between the tubular element and the core element, the core element being of cylindrical shape along said duct, and a plurality of microwave-generating units arranged outside the tubular element and at different angular positions around the tubular element for microwave treatment of the grain flow.

One advantage of the present invention is that the flow of grain, through microwave treatment, will be uniformly heated and will have a uniform temperature distribution. All parts of the flow of grain will be equally exposed by microwave radiation. As opposed to prior-art technology also the part of the flow of grain that is furthest away from the microwave-generating unit, i.e. the part of the flow of grain that passes closest to the core element, will be heated by the microwaves, and the desired effect of reducing the microorganisms and the enzymes is obtained in the whole flow.

A further advantage is that the mass flow can be increased as compared with prior art, all the while maintaining the uniform microwave treatment of the flow of grain. Because of the core element, the depth of the flow of grain, or the width of the duct, can be maintained at a value that enables a uniform microwave treatment of the flow of grain, while allowing the mass flow to be increased since the diameter of the tubular element can be considerable larger than if the flow only passes through a tubular element without a core. Because the mass flow can be increased, the present invention offers a faster and more efficient process for the treatment of grain.

Moreover, microwave treatment of the grain may be energy-saving, since no or little extra water and no steam are added in the process, which results in lower moisture content in the grain after treatment. Because the moisture content is lower the grain does not have to be dried after the treatment and only cooling of the grain is needed. The water that occurs naturally in the grain is evaporated during heating and rises upstream, thus conditioning the flow of grain further up in the device. This means that microwave treatment may result in a lower degree of pregelatinization. Because of the lower water content obtained by the microwave treatment, the grain, for example in the case of oats, may become essentially not cold swelling, which implies a smaller degree of pregelatinization and thus an improved pumping ability in any subsequent water-based applications. Moreover, the grain will have a well-preserved botanical structure, fragrance, taste and colour. The microwave treatment may provide a uniform temperature in the oat kernels through the whole grain kernel. When heating by supplying steam, heating of the kernels occurs by the surface of the kernels becoming hot. Because of the uniform temperature distribution obtained with microwave treatment the oat kernels will have, for example, excellent flaking properties.

Preferably, the tubular element can be vertically oriented.

The tubular element can be of a cylindrical shape along said duct, preferably of a circular-cylindrical shape.

The core element can be of circular-cylindrical shape along said duct. If the tubular element and the core element are of a circular-cylindrical shape, the distance between the tubular element and the core element is constant along the extent of the duct. This facilitates a uniform microwave treatment of the flow of grain.

A plurality of microwave-generating units is arranged outside the tubular element and at different angular positions around the tubular element. By arranging a plurality of microwave-generating units along the circumference of the tubular element, a uniform distribution of microwaves, and thereby a uniform microwave treatment and heating of grain, can be obtained in the whole of the duct in which the grain flows.

The grain can be heated to 70-120°C. For example, the temperature range of 70-80°C may have an enzyme deactivating effect, the temperature range of 80-90°C may have an enzyme deactivating and a microbial killing effect, the temperature range of 90-100°C may have an enzyme deactivating effect, a microbial killing effect and give good grain properties, such as good flaking properties of the grain kernels. Temperatures above 100°C, for example in the temperature range of 100-120°C may have an enzyme deactivating effect, a microbial killing effect and give good grain properties and give the grain kernels roasted properties. The grain may be heated, for example, to 70-120°, 80-120°C, 90-120°C. It may be preferable for the grain to be heated to 90-100°C, more preferably to 93-97°C, and most preferably to 94-96°C.

The tubular element may be made of a polymer material. The tubular element may be made, for example, of polypropylene. The tubular element may also be made of glass or combinations of polymer material and glass. A polymer material affords good penetration of the microwaves through the tubular element. Moreover, the polymer material may be transparent to allow visual inspection of the process, in particular upstream and downstream of the microwave treatment.

Said duct may have, at said at least one microwave-generating unit, a width, as measured between the tubular element and the core element transversely of said longitudinal direction, which width is less than 25 cm, preferably less than 20 cm and more preferably less than 15 cm. Said width may be, for example, approximately 15 cm or approximately 12.5 cm. It has been found that such widths of the duct are advantageous in achieving a uniform microwave distribution, and thus a uniform temperature increase, in the flow of grain when using commercially available microwave units to this end. The width of the duct is regulated through the selection of the diameter of the tubular element in combination with the diameter of the core element. The cross-sectional area of the duct transversely of the longitudinal direction varies as a function of the width of the duct and, thus, said cross-sectional area can be selected or can vary by varying the diameter of the tubular element and the core element, suitably while maintaining a duct width below 25 cm. The cross-sectional area of the duct may thus be selected to be greater than 0.03 m². For example, the cross-sectional area may thus be selected to be greater than 0.03; 0.04; 0.05; 0.1; 0.2; 0.3; 0.4; 0.5; 0.6; 0.7; 0.8; 0.9; 1; 1.1; 1.2; 1.3; 1.4; 1.5 m² and, accordingly, the cross-sectional area may be, for example, 0.2 m² or greater. By keeping said cross-sectional area great, large mass flows of grain can be treated in accordance with the invention. The diameter of the core element may be larger than 5 cm, larger than 10 cm, larger than 15 cm, larger than 20 cm, larger than 30 cm, larger than 40 cm, larger than 50 cm, larger than 60 cm or larger than 100 cm, and the diameter of the tubular element may have a diameter such that, in combination with the diameter of the core element, said inventive duct width and cross-sectional area are obtained. The diameter of the core element may be limited to a maximum of 225 cm. The diameter of the tubular element may be limited to a maximum of 250 cm. The cross-sectional area of the duct may be limited to a maximum of 1.75 m². The core element can be made of a polymer material, which polymer material is capable of providing good penetration of the microwaves through the core element. This means that it may be possible, according to the invention, for microwaves that have penetrated through the grain in the duct to penetrate also the core element and again into the grain in the duct to heat the grain, which may be advantageous in order to obtain a uniform heating of the grain. The core element can be tubular, which may increase the microwave permeability.

It is preferable that the mass flow in the duct should be regulated by a feeding device downstream of the outlet of the tubular element, and by regulating the flow the temperature to which the grain is heated can be controlled.

The device may further comprise a husking device for husking of said grain, which husking device can preferably be arranged to husk said grain before it is subjected to said microwave treatment. By removing the husks from the grain before the microwave treatment, the ability of the microwaves to penetrate into the kernel is improved.

The device may further comprise a flaking device for forming flakes from said grain, preferably arranged to flake said grain in a continuous process after it has been subjected to said microwave treatment. By flaking is meant processing of the grain to obtain a finished product, for example oat flakes. By heating said grain, for example to 90-100°C, good flaking properties can be obtained in the grain.

According to another aspect of the invention, a method for microwave treatment of grain is suggested, which comprises providing a flow of grain in a duct formed between a tubular element and a core element arranged at least partly inside the tubular element, the core element being of a cylindrical shape along said duct, and generating microwave from a plurality of microwave-generating units arranged outside the tubular element and at different angular positons around the tubular element which are directed towards said duct and extend into the flow of grain.

The method has all the advantages associated with the device, and so these will not be described any further.

The method may further comprise husking of said grain, preferably before it is subjected to said microwave treatment.

The method may further comprise flaking of said grain for forming flakes, preferably after said grain has been subjected to said microwave treatment.

### Brief Description of the Drawings

The present invention will now be described by way of example with reference to the accompanying drawings, which show an embodiment of the present invention.
Fig. 1a is a schematic cross-sectional view, in the longitudinal direction of the tubular element, of a device for microwave treatment of grain.
Fig. 1b is a schematic cross-sectional view, transversely of the longitudinal direction, of the device in Fig. 1a.
Fig. 2 is a cross-sectional view, in the longitudinal direction, of an embodiment of the present invention with a plurality of microwave-generating units arranged according to a certain configuration.
Fig. 2b is a schematic cross-sectional view, transversely of the longitudinal direction, of the embodiment in Fig. 2a.
Fig. 3 illustrates schematically a flowchart for a grain processing operation.

### Detailed Description

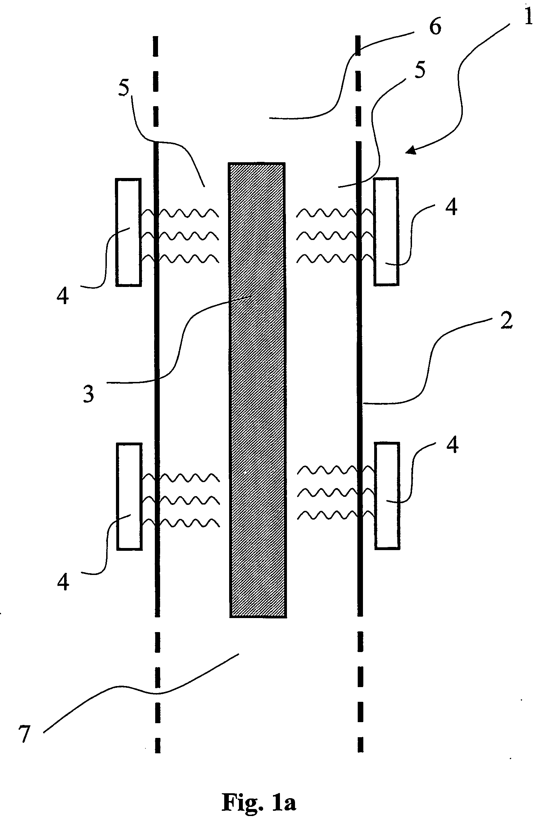

Fig. 1a shows in cross-section the basic structure of a device 1 for microwave treatment of grain. The grain may be, for example, wheat, maize, rice, barley, oats, rye, durra, sorghum, peas, beans and spices. The grain may be in the form of whole or parts of groats or kernels, for example grits. Before the grain reaches the device 1 for microwave treatment they may have passed a number of preceding treatment steps, such as cleaning and husking. In one embodiment the grain has been husked when it reaches the microwave treatment step. It may be preferable for the grain to be husked oat kernels.

The device 1 for microwave treatment of grain comprises a tubular element 2, a core element 3 and a plurality of microwave-generating units 4. The tubular element 2 extends vertically along a longitudinal direction. In the embodiment shown, the tubular element 2 is cylinder-shaped, and can preferably be a tube. The tubular element 2 is made of a polymer material through which microwaves can propagate without any substantial attenuation thereof.

The core element 3 is arranged at least partly inside the tubular element 2 such that a duct 5 is formed between the tubular element 2 and the core element 3. The duct 5 is arranged to accommodate a flow of grain from the inlet 6 of the tubular element 2 to its outlet 7 in the longitudinal direction of the tubular element 2. The core element 3 extends along the same longitudinal direction as the tubular element 2.

Outside the tubular element 2 a plurality of microwave-generating units 4 are provided which are arranged at different angular positions around the tubular element. The microwave-generating units 4 generate microwaves that are directed towards the duct 5 and the flow of grain passing through the duct 5. In the embodiment shown, the microwave-generating units 4 are arranged in two groups, which are spaced apart from each other.

When the flow of grain enters the inlet 6 of the tubular element 2 and encounters the core element 3, the flow of grain will spread around the core element 3 to flow through the duct 5 formed between the tubular element 2 and the core element 3.

When said grain flows through the duct 5 from the inlet 6 of the tubular element 2 to its outlet 7 and passes the microwave-generating units 4, the flow of grain will be exposed to microwaves which reduce the microorganisms and deactivate enzymes in said grain. The width of the duct 5 is kept small enough that a uniform heating and temperature distribution is obtained by means of microwave treatment in the whole flow of grain. At the same time, the mass flow will be great since the diameter/circumference of the tubular element 2 can be large. The width of the duct 5 is regulated through the selection of the diameter of the tubular element 2 in combination with the diameter of the core element 3.

After the flow of grain has passed the zones of microwave radiation, the flow of grain is collected at the outlet 7 of the tubular element 2 in preparation of a subsequent process step, if any.

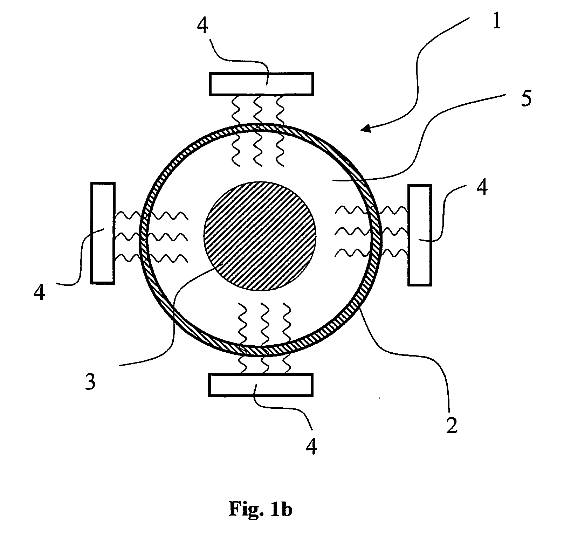

Fig. 1b shows the embodiment in Fig. 1 a as seen in a cross-section taken transversely of the longitudinal direction of the tubular element 2. In the embodiment shown, the tubular element 2 and the core element 3 are circular-cylindrical. The core element 3 is centered inside the tubular element 2. In this way, the distance between the tubular element 2 and the core element 3, and thus the width of the duct 5, is kept constant. The constant distance makes it easier to achieve a uniform treatment of the flow of grain. Outside and around the tubular element 2 a plurality of microwave-generating units 4 are provided.

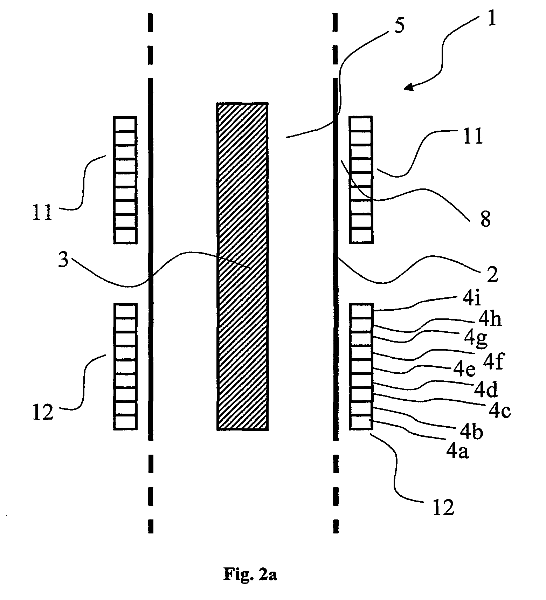

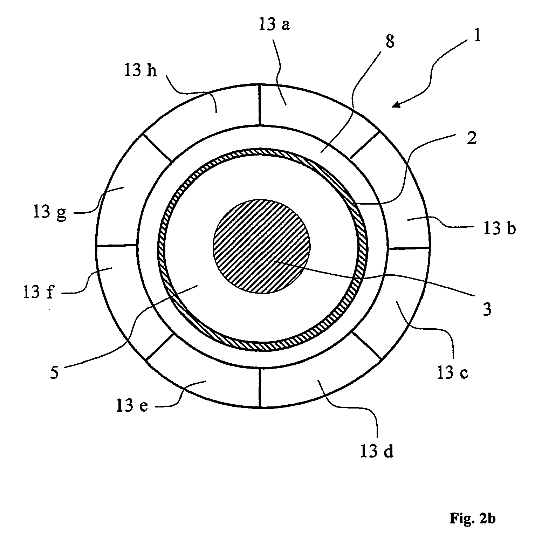

Figs 2a and b show a specific configuration of the microwave-generating units 4 according to one embodiment. In this configuration the microwave-generating units 4 are arranged in an upper and a lower microwave-generating section 11, 12. The upper and lower microwave-generating sections 11, 12 are spaced apart from each other. The upper and lower microwave-generating sections 11, 12 are also arranged at some distance from the outside of the tubular element 2, so that a gap 8 is formed between the microwave-generating sections 11, 12 and the tubular element. The microwave-generating sections 11, 12 surround the tubular element 2.

Each microwave-generating section 11, 12 is formed, in the direction transversely of the longitudinal direction, of eight sectors 13a-h, as shown in Fig. 2b. Each sector 13a-h constitutes a pie piece and together they form the circular microwave-generating section 11, 12.

Each sector 13a-h consists in turn of nine microwave-generating units 4a-i arranged on top of each other in such a manner that a sector 13a-h consists of nine storeys. Accordingly, each microwave-generating section comprises 72 microwave-generating units 4a-i arranged in 8 sectors 13a-h and nine storeys. This configuration of the microwave-generating units 4 allows a uniform spreading of the microwaves in the duct, and so ensures a uniform microwave treatment of the flow of grain.

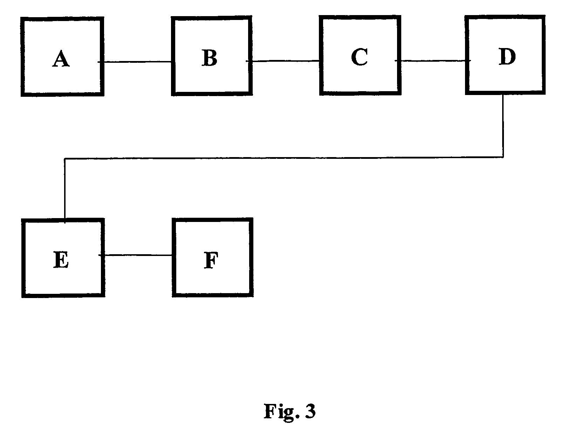

The microwave treatment of the flow of grain can be a partial step of a process for refining grain to obtain a finished product. In Fig. 3, this process is illustrated schematically in the form of a flowchart. The process begins by receiving grain in step A. In step B, cleaning of the grain is effected, whereby undesirable material present in the flow of grain is sorted out. In the following step C, husking of the grain takes place, whereby the hulls around the grain kernels are removed and separated from the grain flow. Then in step D, the microwave treatment described above of the flow of the husked kernels or groats is carried out. Possibly, if so required, conditioning of the grain may be effected prior to the microwave treatment. After the microwave treatment, flaking of the kernels or groats can be carried out in step E for the purpose of forming flakes. In one application of the present invention, the grain being treated may be oats, in which case flaking of the oat kernels is performed to form oat flakes. Finally, cooling of the flaked grain takes place in step F. The grain is then ready for packing and further distribution. According to one embodiment, the above process A-F is a continuous process.

In the example below the grain that is to be subjected to the microwave treatment is oat kernels. The oat kernels are to be subjected to a subsequent flaking for forming oat flakes and the microwave treatment is performed for the purpose of conditioning the oat kernels in preparation of flaking.

After cleaning and husking, the flow of oat kernels reaches the device 1 for microwave treatment of grain. in this exemplifying embodiment, which is intended and adapted for microwave treatment of oat kernels, the tubular element 2 is of a circular-cylindrical shape as illustrated in Figs 1a and b with a diameter of 600 mm. In this embodiment, the tubular element 2 is made of polypropylene. Also the core element 3 is of circular-cylindrical shape with a diameter of 300 mm. Thus, the duct 5 formed between the tubular element 2 and the core element 3 has a width of 150 mm. The cross-sectional area of the duct transversely of the longitudinal direction is, in this example, approximately 0.2 m². The microwave-generated units 4 are arranged in the configuration described in conjunction with Figs 2a and b. This means two sections 11, 12 with 72 microwave-generating units 4 each, which sections 11, 12 are spaced apart from each other. Thus, in this exemplifying embodiment the device 1 for microwave treatment of grain comprises, in total, 144 microwave units 4 each with a power of 1000 W, which gives a total power of approximately 144 kW. The measured temperature is in the range of 95±1°C in the whole flow where it is hottest at the end of the microwave treatment, also in the part of the flow that passes furthest away from the microwave-generating units 4.

These values have been found to give good results in the microwave treatment of oat kernels. A uniform microwave treatment of the flow of oat kernels is obtained by the whole flow being uniformly heated and the temperature being uniformly distributed. Also the part of the flow that passes furthest away from the microwave-generating units 4 is affected by the microwaves. At the same time, the oat kernels in the part of the flow that passes closest to the microwave-generating units will not be heated to a temperature that is so high that they are burnt or their properties otherwise changed for the worse. By using the selected values it is possible to achieve a mass flow of 2000 kg per hour for microwave treatment of oat kernels while maintaining a uniform heating by means of microwave treatment of the whole flow of oat kernels. It will be appreciated that by selecting larger diameters for the tubular element in combination with the core element and inventive widths of the duct, larger mass flows can be treated. For example, mass flows of 1-10 tons per hour can be treated.

It will be appreciated that if, for example, half the mass flow of grain (as compared with the flow in the exemplifying embodiment described above) is to be treated, one section 11 or 12 is enough, in which case the tubular element can be made shorter. Similarly, it will be appreciated that if a larger mass flow of grain is to be treated, for example a flow twice that of the exemplifying embodiment described above, 4 sections can be used, in which case the tubular element is made longer. In this way a varying number of sections can be used and the tubular element can be of different lengths, so as to enable substantially identical treatment of grain mass flows of different size. For example 1, 2, 3, 4 or 5-10 sections can be used. By increasing, for example, the number of sections from 1 to 6, a mass flow of grain that is six times greater can be treated.

In the embodiment described above, the tubular element and the core element are in the form of a circular-cylindrical tube, but also other forms are conceivable. The cross-section of the tubular element and the core element transversely of the longitudinal direction may have the form of a polygon, for example a hexagon, heptagon, octagon etc. It will also be appreciated that the tubular element and the core element may have a shape other than cylindrical.

By means of the device for microwave treatment of grain according to the invention efficient microwave treatment is obtained also for large mass flows of grain. Consequently, in the exemplifying embodiment, in which the tubular element 2 is of a circular-cylindrical shape, as illustrated in Figs 1 a and b, with a diameter of 600 mm and in which the core element 3 is of a circular-cylindrical shape with a diameter of 300 mm, a width of 150 mm for the duct 5 is obtained, which duct is formed between the tubular element 2 and the core element 3. A width of 150 mm allows the microwaves to penetrate in a satisfactory manner such that a uniform heating of the grain occurs. The volume of the duct per given unit of length of the tubular element 2 is about three times greater than the volume of a tube without a core element would need to be to allow a comparable uniform heating of the grain (a radius of the tube of approximately 150 mm). Thus, the mass flow in the exemplifying embodiment may be about three times greater than that of a tube without a core element, despite the fact that the length of the tubular element and the tube are substantially the same.

Because the mass flow in the duct can be regulated, for example, by means of a feeding device downstream of the outlet of the tubular element, the temperature to which the grain is heated can be controlled. If a predetermined reference value of the temperature to which the grain is to be heated is specified, the discharge of grain effected by the feeding device may be used to control the flow of grain in such a manner that if the temperature exceeds the temperature reference value, the flow of grain is increased and if the temperature falls below the temperature reference value the flow is decreased.

## Claims

1. A device (1) for microwave treatment of grain, which device (1) comprises
a tubular element (2), which extends along a longitudinal direction,
a core element (3), which is arranged at least partly inside the tubular element (2) such that a duct (5) arranged to receive a flow of grain in said longitudinal direction is formed between the tubular element (2) and the core element (3), the core element (3) being of a cylindrical shape along said duct (5), and
a plurality of microwave-generating units (4) arranged outside the tubular element (2) and at different angular positions around the tubular element (2) for microwave treatment of the grain flow.

2. A device (1) as claimed in claim 1, wherein the tubular element (2) is of a cylindrical shape along said duct, preferably of a circular-cylindrical shape.

3. A device (1) as claimed in claim 1 or 2, wherein the core element (3) is of a circular-cylindrical shape along said duct (5).

4. A device (1) as claimed in any one of claims 1-3, wherein the tubular element (2) is made of a polymer material.

5. A device (1) as claimed in any one of claims 1-4, wherein said duct (5) at said at least one microwave-generating unit (4) has a width, as measured between the tubular element (2) and the core element (3) transversely of said longitudinal direction, which width is less than 25 cm, preferably less than 20 cm and more preferably less than 15 cm.

6. A device as claimed in any one of claims 1-5, wherein the cross-sectional area of the duct transversely of the longitudinal direction is greater than 0.03 m².

7. A device (1) as claimed in any one of claims 1-6, wherein the tubular element is vertically oriented.

8. A device (1) as claimed in any one of claims 1-7, further comprising a husking device for husking of said grain, preferably arranged to husk said grain before it is subjected to said microwave treatment.

9. A device (1) as claimed in any one of claims 1-8, further comprising a flaking device for forming flakes from said grain, preferably arranged to flake said grain after it has been subjected to said microwave treatment.

10. A method for microwave treatment of grain, comprising:
providing a flow of grain in a duct (5) formed between a tubular element (2) and a core element (3) arranged at least partly inside the tubular element (2), the core element (3) being of a cylindrical shape along said duct (5), and
generating microwaves from a plurality of microwave-generating units (4) arranged outside the tubular element (2) and at different angular positions around the tubular element (2) which microwaves are directed towards said duct (5) and extend into the flow of grain.

11. A method as claimed in claim 10, further comprising husking of said grain, preferably before it is subjected to said microwave treatment.

12. A method as claimed in claim 10 or 11, further comprising flaking of said grain for forming flakes, preferably after said grain has been subjected to said microwave treatment.

13. A method as claimed in any one of claims 10-12, wherein said grain is heated by the microwaves to a temperature of 70-120°C.

## Patentansprüche

1. Gerät (1) für die Mikrowellenbehandlung von Getreide, wobei das Gerät (1) umfasst:
ein rohrförmiges Element (2), welches sich entlang einer Längsrichtung erstreckt,
ein Kernelement (3), welches wenigstens teilweise innerhalb des rohrförmigen Elements (2) angeordnet ist, so dass ein Kanal (5), der dafür eingerichtet ist, einen Strom von Getreide in der Längsrichtung aufzunehmen, zwischen dem rohrförmigen Element (2) und dem Kernelement (3) ausgebildet ist, wobei das Kernelement (3) von einer zylindrischen Form entlang des Kanals (5) ist, und
mehrere Mikrowellen erzeugende Einheiten (4), die außerhalb des rohrförmigen Elements (2) und in unterschiedlichen Winkelpositionen um das rohrförmige Element (2) herum angeordnet sind, zur Mikrowellenbehandlung des Getreidestroms.

2. Gerät (1) nach Anspruch 1, wobei das rohrförmige Element (2) von einer zylindrischen Form entlang des Kanals ist, vorzugsweise von einer kreiszylindrischen Form.

3. Gerät (1) nach Anspruch 1 oder 2, wobei das Kernelement (3) von einer kreiszylindrischen Form entlang des Kanals (5) ist.

4. Gerät (1) nach einem der Ansprüche 1-3, wobei das rohrförmige Element (2) aus einem Polymermaterial hergestellt ist.

5. Gerät (1) nach einem der Ansprüche 1-4, wobei der Kanal (5) an der mindestens einen Mikrowellen erzeugenden Einheit (4) eine Breite, gemessen zwischen dem rohrförmigen Element (2) und dem Kernelement (3) quer zu der Längsrichtung, aufweist, welche kleiner als 25 cm, vorzugsweise kleiner als 20 cm und stärker bevorzugt kleiner als 15 cm ist.

6. Gerät (1) nach einem der Ansprüche 1-5, wobei die Querschnittsfläche des Kanals quer zu der Längsrichtung größer als 0,03 m² ist.

7. Gerät (1) nach einem der Ansprüche 1-6, wobei das rohrförmige Element vertikal ausgerichtet ist.

8. Gerät (1) nach einem der Ansprüche 1-7, welches ferner eine Schälvorrichtung zu Schälen des Getreides umfasst, welche vorzugsweise dafür eingerichtet ist, das Getreide zu schälen, bevor es der Mikrowellenbehandlung unterzogen wird.

9. Gerät (1) nach einem der Ansprüche 1-8, welches ferner eine Flockungsvorrichtung zum Bilden von Flocken aus dem Getreide umfasst, welche vorzugsweise dafür eingerichtet ist, das Getreide zu flocken, nachdem es der Mikrowellenbehandlung unterzogen wurde.

10. Verfahren für die Mikrowellenbehandlung von Getreide, welches umfasst:
Bereitstellen eines Stroms von Getreide in einem Kanal (5), der zwischen einem rohrförmigen Element (2) und einem wenigstens teilweise innerhalb des rohrförmigen Elements (2) angeordneten Kernelement (3) ausgebildet ist, wobei das Kernelement (3) von einer zylindrischen Form entlang des Kanals (5) ist, und
Erzeugen von Mikrowellen durch mehrere Mikrowellen erzeugende Einheiten (4), die außerhalb des rohrförmigen Elements (2) und in unterschiedlichen Winkelpositionen um das rohrförmige Element (2) herum angeordnet sind, wobei die Mikrowellen in Richtung des Kanals (5) ausgerichtet sind und sich in den Strom von Getreide hinein erstrecken.

11. Verfahren nach Anspruch 10, welches ferner das Schälen des Getreides umfasst, vorzugsweise bevor es der Mikrowellenbehandlung unterzogen wird.

12. Verfahren nach Anspruch 10 oder 11, welches ferner das Flocken des Getreides zur Herstellung von Flocken umfasst, vorzugsweise nachdem das Getreide der Mikrowellenbehandlung unterzogen wurde.

13. Verfahren nach einem der Ansprüche 10-12, wobei das Getreide durch die Mikrowellen auf eine Temperatur von 70-120 °C erwärmt wird.

## Revendications

1. Dispositif (1) pour traitement par micro-ondes de grains, lequel dispositif (1) comprend :
un élément tubulaire (2) qui s'étend dans une direction longitudinale,
un élément de coeur (3) qui est agencé au moins partiellement à l'intérieur de l'élément tubulaire (2) de sorte qu'un conduit (5) agencé pour recevoir un flux de grains dans ladite direction longitudinale soit formé entre l'élément tubulaire (2) et l'élément de coeur (3), l'élément de coeur (3) étant de forme cylindrique le long dudit conduit (5), et
une pluralité d'unités de génération de micro-ondes (4) agencées à l'extérieur de l'élément tubulaire (2) et à différentes positions angulaires autour de l'élément tubulaire (2) pour le traitement par micro-ondes du flux de grains.

2. Dispositif (1) selon la revendication 1, dans lequel l'élément tubulaire (2) est de forme cylindrique le long dudit conduit, de préférence de forme circulaire cylindrique.

3. Dispositif (1) selon la revendication 1 ou 2, dans lequel l'élément de coeur (3) est de forme circulaire cylindrique le long dudit conduit (5).

4. Dispositif (1) selon l'une quelconque des revendications 1 à 3, dans lequel l'élément tubulaire (2) est constitué d'un matériau polymère.

5. Dispositif (1) selon l'une quelconque des revendications 1 à 4, dans lequel ledit conduit (5) à ladite au moins une unité de génération de micro-ondes (4) a une largeur mesurée entre l'élément tubulaire (2) et l'élément de coeur (3) transversalement à ladite direction longitudinale qui est inférieure à 25 cm, de préférence inférieure à 20 cm, et avec plus de préférence inférieure à 15 cm.

6. Dispositif (1) selon l'une quelconque des revendications 1 à 5, dans lequel la surface de coupe transversale du conduit transversalement à la direction longitudinale est supérieure à 0,03 m².

7. Dispositif (1) selon l'une quelconque des revendications 1 à 6, dans lequel l'élément tubulaire est orienté verticalement.

8. Dispositif (1) selon l'une quelconque des revendications 1 à 7, comprenant en outre un dispositif de vannage pour vanner lesdits grains, de préférence agencé pour vanner lesdits grains avant de les soumettre au dit traitement par micro-ondes.

9. Dispositif (1) selon l'une quelconque des revendications 1 à 8, comprenant en outre un dispositif de floconnage pour former des flocons à partir desdits grains, de préférence agencé pour floconner lesdits grains après les avoir soumis au dit traitement par micro-ondes.

10. Procédé de traitement par micro-ondes de grains, comprenant :
la fourniture d'un flux de grains dans un conduit (5) formé entre un élément tubulaire (2) et un élément de coeur (3) agencé au moins partiellement à l'intérieur de l'élément tubulaire (2), l'élément de coeur (3) étant de forme cylindrique le long dudit conduit (5), et
la génération de micro-ondes à partir d'une pluralité d'unités de génération de micro-ondes (4) agencées à l'extérieur de l'élément tubulaire (2) et à différentes positions angulaires autour de l'élément tubulaire (2), lesquelles micro-ondes étant dirigées vers ledit conduit (5) et s'étendant dans le flux de grains.

11. Procédé selon la revendication 10, comprenant en outre le vannage desdits grains, de préférence avant de les soumettre au dit traitement par micro-ondes.

12. Procédé selon la revendication 10 ou 11, comprenant en outre le floconnage desdits grains pour former des flocons, de préférence avant de soumettre lesdits grains au dit traitement par micro-ondes.

13. Procédé selon l'une quelconque des revendications 10 à 12, dans lequel lesdits grains sont chauffés par les micro-ondes à une température de 70 à 120°C.
